(19) **Europäisches Patentamt / European Patent Office / Office européen des brevets**

(11) **EP 2 366 661 A1**

(12) **EUROPEAN PATENT APPLICATION**
published in accordance with Art. 153(4) EPC

(43) Date of publication:
**21.09.2011 Bulletin 2011/38**

(51) Int Cl.:
**C01B 7/04** (2006.01)

(21) Application number: **09823656.5**

(22) Date of filing: **29.10.2009**

(86) International application number:
**PCT/JP2009/068569**

(87) International publication number:
**WO 2010/050546 (06.05.2010 Gazette 2010/18)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.10.2008 JP 2008280262**

(71) Applicant: **Sumitomo Chemical Company, Limited Tokyo 104-8260 (JP)**

(72) Inventors:
• **SEKI, Kohei**
  **Niihama-shi**
  **Ehime 792-0045 (JP)**
• **OMOTO, Norihito**
  **Niihama-shi**
  **Ehime 792-0025 (JP)**

(74) Representative: **Vossius & Partner**
  **Siebertstrasse 4**
  **81675 München (DE)**

(54) **PROCESS FOR PRODUCING CHLORINE**

(57) Disclosed is a process for producing chlorine, which makes it possible to successfully continue an oxidation reaction, even if sulfur component-containing hydrogen chloride is used. This process comprises a step of feeding sulfur component-containing hydrogen chloride and oxygen into a reaction tube 1 comprising a catalyst packed bed 10, to thereby oxidize the hydrogen chloride to produce chlorine, wherein the catalyst packed bed 10 includes an alumina-mixed catalyst packed bed 20 formed of a mixture of a catalyst 3 with alumina (or a diluent 4), and wherein the BET specific surface area of the alumina is from 10 to 500 m$^2$/g. Preferably, the alumina is γ-alumina and/or θ-alumina.

Fig. 1

**Description**

TECHNICAL FIELD

The present patent application has been filed claiming the priority or benefit of the filing of the Japanese Patent Application No. 2008-280262 (filed on October 30, 2008) under the Paris convention, and the entire content of this application should be incorporated in the description of the present application by reference to it.
The present invention relates to a process for producing chlorine, comprising the step of feeding sulfur component-containing hydrogen chloride and oxygen into a reaction tube comprising a catalyst packed bed for oxidizing the hydrogen chloride.

BACKGROUND ART

Chlorine is useful as a raw material for vinyl chloride, phosgene, etc. It is known that chlorine is produced by a method utilizing an oxidation reaction: that is, a hydrogen chloride gas and oxygen are fed into a reaction tube comprising a catalyst packed bed to thereby oxidize the hydrogen chloride for obtaining chlorine.
Generally, the above-described catalyst packed bed has a catalyst packed bed which is charged with a catalyst diluted with a diluent in order to suppress occurrence of hot spots due to accumulation of local reaction heat on the catalyst packed bed. The diluent is required to be inert to the above-described oxidation reaction, to have a heat conductivity for removing heat of the hot spots (heat-removing ability), to have a heat resistance for withstanding a temperature during the oxidation reaction, and the like. A diluent which satisfies these requirements is $\alpha$-alumina which has come into wide use (cf., Patent Publication 1).
The above-described hydrogen chloride tends to contain a sulfur component derived from its generation source. It is well known that the direct use of sulfur component-containing hydrogen chloride as a raw material in the above-described oxidation reaction would give an adverse influence on a catalyst. Therefore, hydrogen chloride for use in the oxidation reaction is required to be decreased in sulfur component as much as possible.
For example, Patent Publication 2 discloses a method of using hydrogen chloride by-produced in the course of production of isocyanates, as a raw material for use in the above-described oxidation reaction, wherein the by-produced hydrogen chloride is extremely decreased in its sulfur component content by decreasing a sulfur component content in carbon monoxide as a raw material for the isocyanates to 2,000 ppb by volume or less. Patent Publication 3 or 4 discloses a method of removing a sulfur component from sulfur component-containing hydrogen chloride, by bringing a given metal compound into contact with sulfur component-containing hydrogen chloride substantially at room temperature, and allowing the metal compound to adsorb or absorb the sulfur component.
However, any of the methods of Patent Publication 2 to 4, in which hydrogen chloride decreased in its sulfur component content as much as possible is used in the above-described oxidation reaction, is unsatisfactory from the viewpoint of the operation cost because of the need of the sulfur component-removing step.
   Patent Publication 1: JP-A-2000-281314
   Patent Publication 2: JP-A-2006-117528
   Patent Publication 3: JP-A-2004-277282
   Patent Publication 4: JP-A-2005-177614

DISCLOSURE OF THE INVENTION

PROBLEM TO BE SOLVED BY THE INVENTION

An object of the present invention is to provide a process for producing chlorine, whereby an oxidation reaction can be successfully continued even when sulfur component-containing hydrogen chloride is used.

MEANS FOR SOLVING THE PROBLEM

To solve this problem, the present inventors have contemplated that it would be possible to prevent degradation of a catalyst due to a sulfur component, if the catalyst is diluted with a diluent having a higher sulfur component-adsorption or -absorption ability so as to allow the diluent to selectively adsorb or absorb the sulfur component. As a result of their intensive studies, $\alpha$-alumina which is widely used as such diluent is found to be superior in a heat conductivity and heat resistance but poor in a sulfur component adsorption or absorption ability under the oxidation reaction conditions because of its so small BET specific surface area as several square meters per gram (m$^2$/g). Thus, it is found that the use of $\alpha$-

alumina is not so effective to prevent degradation of a catalyst attributed to a sulfur component.

As a result of the present inventors' further studies based on this finding, it is found that alumina having a BET specific surface area as large as 10 to 500 $m^2/g$ is able to well adsorb or absorb the sulfur component under the oxidation reaction conditions, and that the use of such alumina is effective to sufficiently suppress degradation of the catalyst due to the sulfur component.

That is, the chlorine production process of the present invention includes the following processes.

(1) A process for producing chlorine by feeding sulfur component-containing hydrogen chloride and oxygen to a reaction tube comprising a catalyst packed bed to thereby oxidize the hydrogen chloride, characterized in that the catalyst packed bed includes an alumina-mixed catalyst packed bed formed of a mixture of a catalyst and alumina, and in that the BET specific surface area of the alumina is from 10 to 500 $m^2/g$.

(2) The process defined in the item (1), wherein the alumina is γ-alumina and/or θ-alumina.

(3) The process defined in the item (1) or (2), wherein the content rate of the alumina in the alumina-mixed catalyst packed bed is from 5 to 90% by weight.

(4) The process defined in any one of the items (1) to (3), wherein the alumina-mixed catalyst packed bed occupies a region on the upstream side of the reaction tube.

(5) The process defined in any one of the items (1) to (4), wherein the catalyst is at least one kind of catalyst selected from the group consisting of a copper-containing catalyst, a chromium-containing catalyst and a ruthenium-containing catalyst.

(6) The process defined in the item (5), wherein the ruthenium-containing catalyst is a supported ruthenium oxide catalyst which comprises a carrier and ruthenium oxide supported on the carrier.

(7) The process defined in the item (5), wherein the ruthenium-containing catalyst is a supported ruthenium oxide catalyst which comprises a carrier, and ruthenium oxide and silica supported on the carrier.

(8) The process defined in the item (6) or (7), wherein the carrier contains 30% by weight or more of titania based on the entire weight of the carrier.

(9) The process defined in the item (8), wherein the titania in the carrier comprises 20% by weight or more of rutile type titania.

(10) The process defined in any one of the items (1) to (9), wherein the content of sulfur component in the hydrogen chloride is 1 ppm by volume or less based on the volume of the hydrogen chloride.

EFFECT OF THE INVENTION

According to the present invention, chlorine can be produced by successfully continuing an oxidation reaction, even if sulfur component-containing hydrogen chloride is used.

BRIEF DESCRIPTION OF THE DRAWINGS

Fig. 1 shows a schematic illustrative diagram of an embodiment of a reaction tube according to the present invention.
Fig. 2, consisting of Figs. 2(a) and 2(b), shows other embodiments of a reaction tube according to the present invention.
Fig. 3 shows a graph indicating relationships between operation times and average temperatures of catalyst packed beds of Example 2 and Comparative Example 2.

DESCRIPTION OF NUMERAL REFERENCES

1, 5 or 6 = a reaction tube
1a = the inlet of the reaction tube
1b = the outlet of the reaction tube
2 = a partition material
3 = a catalyst
4 = a diluent
10, 11, 12, 30 or 30a = a catalyst packed bed
20, 20a or 20b = an alumina-mixed catalyst packed bed
21 = a first alumina-mixed catalyst packed bed

22 = a second alumina-mixed catalyst packed bed
23 = a third alumina-mixed catalyst packed bed

BEST MODES FOR CARRYING OUT THE INVENTION

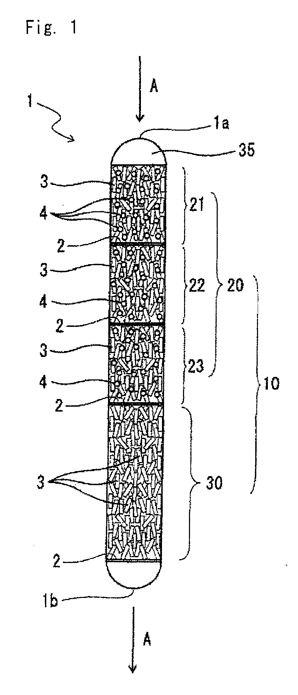

Hereinafter, an embodiment of the chlorine production process of the present invention will be described in detail with reference to the accompanying drawings. Fig. 1 shows a schematic illustrative diagram of a reaction tube according to this embodiment. As seen in Fig. 1, this embodiment relates to a fixed-bed type reactor. Chlorine is produced by feeding sulfur component-containing hydrogen chloride and oxygen into a reaction tube 1 comprising a catalyst packed bed 10, thereby oxidizing the same hydrogen chloride.

The catalyst packed bed 10 includes a catalyst packed bed 30 which occupies a region on the downstream side relative to a gas flowing direction indicated by the arrow A, i.e., on the downstream side of the reaction tube 1. The catalyst packed bed 30 is formed as follows: a partition material 2 is charged in the lower portion of the reaction tube 1, and a catalyst 3 is charged from the upper opening of the reaction tube 1 to form the catalyst packed bed 30 on the partition material 2. As the partition material 2, there is used, for example, a nickel-made perforated plate, quartz wool or the like.

The catalyst 3 participates in conversion of hydrogen chloride into chlorine and water with the use of oxygen and also in oxidation of a sulfur component in the hydrogen chloride. Preferably, such catalyst 3 is at least one kind of catalyst selected from the group consisting of a copper-containing catalyst (or a copper catalyst), a chromium-containing catalyst (or a chromium catalyst) and a ruthenium-containing catalyst (or a ruthenium catalyst).

An example of the copper catalyst is so-called Deacon catalyst which comprises copper chloride, potassium chloride and additional various compounds as a third component. Examples of the chromium catalyst include chromium oxide-containing catalysts disclosed in JP-A-61-136902, JP-A-61-275104, JP-A-62-113701 and JP-A-62-270405. Examples of the ruthenium catalyst include ruthenium oxide-containing catalysts disclosed in JP-A-9-67103, JP-A-10-338502, JP-A-2000-281314, JP-A-2002-79093 and JP-A-2002-292279.

This embodiment is preferably applied to the ruthenium catalyst, particularly the ruthenium oxide-containing catalyst among the above-described catalysts. The ruthenium oxide-containing catalyst may be, for example, substantially ruthenium oxide alone, a supported ruthenium oxide catalyst in which ruthenium oxide is supported on a carrier such as $\alpha$-alumina, titania (or titanium oxide), silica, zirconia, niobium oxide, activated carbon or the like, or a composite oxide of ruthenium oxide and other oxides such as $\alpha$-alumina, titania, silica, zirconia, niobium oxide or the like.

While, in the supported ruthenium oxide catalyst, the carrier may contain alumina with a large specific surface area as will be described later, it is preferable for the carrier to contain substantially no such alumina. Alumina with a large specific surface area in the carrier would facilitate adsorption or absorption of an oxidized sulfur component onto the supported ruthenium oxide catalyst, which possibly leads to a decrease in the catalytic activity. In this regard, the use of $\alpha$-alumina is not suitable for adsorption or absorption of the sulfur component because of its small BET specific surface area. In other words, if the carrier contains $\alpha$-alumina, the above-described problem would hardly occur.

As the carrier preferable for the supported ruthenium oxide catalyst, there are exemplified metal oxides such as titania, $\alpha$-alumina described above, silica, zirconia and niobium oxide; and optionally, two kinds selected therefrom may be used. Among those, titania is preferable. As the titania, there may be used rutile type titania (i.e., titania having a rutile-type crystalline structure), anatase-type titania (i.e., titania having an anatase-type crystalline structure), amorphous titania and a mixture thereof. Preferable is the carrier containing titania whose crystalline structure is of rutile-type and/or anatase-type.

The carrier contains 30% by weight or more, preferably 30 to 100% by weight of titania based on the entire weight of the carrier. The titania in the carrier contains 20% by weight or more, preferably 20 to 100% by weight of rutile-type titania.

Particularly, a ratio of rutile-type titania to total of rutile-type titania and anatase-type titania (hereinafter optionally referred to as "a rutile-type titania ratio") is 20% or more, preferably 30% or more, more preferably 90% or more. The higher the rutile-type titania ratio, the higher the catalytic activity of the supported ruthenium oxide catalyst.

The rutile-type titania ratio is determined by the X-ray diffraction method (hereinafter referred to as "XRD method") and is calculated by the following equation (I):

[Equation 1]

$$\text{Rutile-type titania ratio (\%)} = [I_R/(I_A + I_R)] \times 100 \qquad \ldots \text{(I)}$$

$I_R$:    an intensity of a diffraction line indicating (110) plane of rutile-type titania
$I_A$:    an intensity of a diffraction line indicating (101) plane of anatase-type titania

Preferably usable as the supported ruthenium oxide catalyst is a catalyst which comprises ruthenium oxide and silica supported on a carrier. By supporting not only ruthenium oxide but also silica on the carrier, sintering of ruthenium oxide due to heat load can be prevented, and the thermal stability and the catalyst lifetime can be improved.
The following catalysts (i) to (iv) are exemplified as such supported ruthenium oxide catalysts.

(i) A catalyst obtained by supporting a silicon compound on a carrier, supporting a ruthenium compound thereon, and calcining such carrier under an oxidizing gas atmosphere.
(ii) A catalyst obtained by subjecting a titanium compound and a silicon compound to a heat treatment under an oxidizing gas atmosphere to obtain a titania carrier in which silica is supported on the carrier, supporting a ruthenium compound on the carrier, and calcining such carrier under an oxidizing gas atmosphere.
(iii) A catalyst obtained by supporting a ruthenium compound on a carrier, supporting a silicon compound on the carrier, and calcining such carrier under an oxidizing gas atmosphere.
(iv) A catalyst obtained by supporting a silicon compound and a ruthenium compound on a carrier, and calcining such carrier under an oxidizing gas atmosphere.

Among the above-described supported ruthenium oxide catalysts (i) to (iv), the supported ruthenium oxide catalysts (i) and (ii) are particularly preferable. As the silicon compound in any of these supported ruthenium oxide catalysts (i) to (iv), there are exemplified silicon alkoxide compounds such as $Si(OR)_4$ (in which R is a $C_{1-4}$ alkyl group), etc.; halogenated silicons such as silicon chloride ($SiCl_4$), silicon bromide ($SiBr_4$), etc.; and silicon halide alkoxide compounds such as $SiCl(OR)_3$, $SiCl_2(OR)_2$, $SiCl_3(OR)$, etc. Particularly, tetraethyl orthosilicate ($Si (OC_2H_5)_4$) is preferable, and optionally, a hydrate thereof may be used, or two or more kinds selected therefrom may be used.
To support the silicon compound and the ruthenium compound on the carrier, the carrier may be impregnated with a solution of these compounds in a suitable solvent; or the carrier may be immersed in this solution to adsorb these compounds thereto.
The oxidizing gas means a gas which contains an oxidizing substance, for example, an oxygen-containing gas or the like. The oxygen concentration of such a gas is usually from about 1 to about 30% by volume. As an oxygen source for such a gas, an air or pure oxygen is usually used. An air or pure oxygen optionally may be diluted with an inert gas or water vapor. As the oxidizing gas, an air is preferable. The calcining temperature is usually from 100 to 1,000°C, preferably from 250 to 450°C.
In the supported ruthenium oxide catalyst which has ruthenium oxide and silica supported on the carrier, the amount of silica to be used is usually from 0.001 to 0.3 mole, preferably from 0.004 to 0.03 mole, per one mole of the carrier.
Preferable as the supported ruthenium oxide catalyst which has ruthenium oxide and silica supported on the carrier are the catalysts disclosed in, for example, JP-A-2008-155199, JP-A-2002-292279, etc.
The catalyst packed bed 10 includes an alumina-mixed catalyst packed bed 20 which occupies a region on the upstream side relative to the gas flowing direction indicated by the arrow A, in other words, a region on the upstream side of the reaction tube 1. The alumina-mixed catalyst packed bed herein referred to is a catalyst packed bed formed of a mixture of the catalyst with alumina. In the present invention, to lower the content of the catalyst in the catalyst packed bed by mixing the catalyst with alumina is optionally referred to as "dilution", and a medium such as alumina for use in lowering the content is optionally referred to as "a diluent". The alumina-mixed catalyst packed bed 20 includes a first alumina-mixed catalyst packed bed 21, a second alumina-mixed catalyst packed bed 22 and a third alumina-mixed catalyst packed bed 23 arranged in this order on the upstream side relative to the gas flowing direction.
Each of the alumina-mixed catalyst packed beds is disposed through the partition materials 2, and is charged with the above-described catalyst 3 diluted with the diluent 4. In this embodiment, as the diluent 4, there is used alumina with a BET specific surface area of from 10 to 500 m$^2$/g, preferably from 20 to 350 m$^2$/g (hereinafter optionally referred to as "high specific surface area alumina"). The use of alumina with such a high BET specific surface area is effective to inhibit degradation of the catalyst 3 due to a sulfur component, since such alumina is able to adsorb or absorb the sulfur component in the co-presence of sulfur oxide and water content which are formed in the presence of the catalyst 3.
The use of alumina with too small a BET specific surface area tends to lower an efficiency of adsorbing or absorbing a sulfur component in hydrogen chloride. The use of alumina with too large a BET specific surface area leads to an excessively small pore diameter, which results in a lower efficiency of adsorbing or absorbing the sulfur component. The BET specific surface area is measured with a specific surface area-measuring apparatus based on the principle of the nitrogen adsorption method.
As the high specific surface area alumina, there are exemplified γ-alumina, θ-alumina, δ-alumina, β-alumina, amorphous alumina, boehmite, etc. among which γ-alumina and θ-alumina are preferable. Each of these kinds of alumina may be used alone, or two or more kinds selected therefrom may be used as a mixture.

The pore volume of the high specific surface area alumina is usually from 0.05 to 1.5 ml/g, preferably from 0.1 to 1.0 ml/g. Too small a pore volume leads to too small a pore diameter, which results in a lower efficiency of adsorbing or absorbing a sulfur component in hydrogen chloride. On the other hand, too large a pore volume leads to a lower specific gravity and a lower heat conductivity, which undesirably hinders stable production of chlorine. The pore volume can be measured by the mercury intrusion technique.

The content rate of the diluent 4 (or the high specific surface area alumina) in each of the alumina-mixed catalyst packed beds is from 5 to 90% by weight, preferably from 10 to 80% by weight. When the content rate of the diluent 4 is too small, the efficiency of adsorbing or absorbing a sulfur component tends to lower, which may make it impossible to obtain the effect of the present invention. When the content rate of the diluent 4 is too large, a chlorine-producing efficiency undesirably tends to lower.

The catalyst 3 and the diluent 4 are charged usually in the form of molded articles. The shape of the molded articles is, for example, spherical (ball-like), cylindrical, ring-like or in the form of irregular particles. As the molding method, for example, extrusion molding, tablet compression, spray molding or the like is employed. The resultant molded articles may be fractured and classified to suitable sizes. In this operation, the diameters of the molded articles are preferably from 0.5 to 10 mm.

Too small a diameter of the molded articles tends to increase a differential pressure of the reaction tube 1, which makes it hard to reliably produce chlorine. Too large a diameter of the molded articles, undesirably, tends to lower a chlorine-producing efficiency. The diameter herein referred to means a diameter of spheres in case of spherical molded articles, a diameter of sections in case of cylindrical molded articles, or a largest diameter of optionally selected sections in case of other shaped molded articles.

To dilute the catalyst 3 by mixing with the diluent 4 and to charge the resulting mixture, the catalyst 3 are previously mixed with the diluent 4, and this mixture is charged in the reaction tube 1; or the catalyst 3 and the diluent 4 are divided into small portions with predetermined weights, respectively, and the small portions of these materials are alternately charged in the reaction tube 1; or the catalyst 3 and the diluent 4 are divided into small portions with predetermined weights, respectively, and the small portions of these materials are concurrently charged in the reaction tube 1.

In case where the catalyst 3 and the diluent 4 are divided into small portions with predetermined weights, respectively, and where the small portions of these materials are alternately charged in the reaction tube 1, it is needed to charge the catalyst 3 at regions on and beneath at least one bed of the charged diluent 4.

If the catalyst 3 are not present just on at least one bed of the diluent 4, it is hard to oxidize a sulfur component in hydrogen chloride concurrently with the conversion of hydrogen chloride into chlorine and water with the use of oxygen, which may make it difficult to obtain a sufficient effect of the present invention. If the catalyst 3 is not present just beneath at least one bed of the diluent 4, poisoning of the catalyst 3 due to a sulfur component can not be prevented by adsorption or absorption of the sulfur component onto the diluent 4. Therefore, the effect of the present invention may not be sufficiently obtained.

In the meantime, there is formed a preheating bed 35 at the uppermost region of the reaction tube relative to the gas flowing direction. Thus, it becomes easy to maintain the temperature of the inlet 1a of the reaction tube at a target temperature, so that the catalyst bed can be effectively utilized to enable efficient production of chlorine. The preheating bed 35 is formed by charging $\alpha$-alumina or the like.

The oxidation reaction of hydrogen chloride is an equilibrium reaction. When the oxidation reaction is carried out at too high a temperature, an equilibrium conversion tends to lower. Therefore, the oxidation reaction is preferably carried out at a relatively low temperature. The reaction temperature is usually from 100 to 500°C, preferably from 200 to 450°C. The reaction pressure is usually from about 0.1 to about 5 MPa.

An air or pure oxygen may be used as the oxygen source. The theoretical molar amount of oxygen relative to hydrogen chloride is 1/4 mole. However, oxygen is used usually in an amount 0.1 to 10 times this theoretical amount. Preferably, water vapor is fed together with hydrogen chloride and oxygen. The molar ratio of water vapor to hydrogen chloride is preferably from 0.01 to 0.2 times.

The hydrogen chloride-feeding rate is usually from about 10 to about 20,000 h$^{-1}$, in terms of a gas-feeding rate per 1 L of the catalyst (L/h in unit, reduced under conditions of 0°C and one normal atmosphere), i.e., in terms of a gas hourly space velocity (or GHSV). The content of a sulfur component in hydrogen chloride is about 30 ppm by volume or less, preferably one ppm by volume or less, based on the volume of hydrogen chloride.

Examples of the sulfur component include carbonyl sulfide (COS), carbon disulfide (CS$_2$), sulfur dioxide (SO$_2$), hydrogen sulfide (H$_2$S), sulfuric acid mist, methyl mercaptan (CH$_3$SH), ethyl mercaptan (C$_2$H$_5$SH), dimethyl sulfide ((CH$_3$)$_2$S), diethyl sulfide ((C$_2$H$_5$)$_2$S), dimethyl disulfide (CH$_3$SSCH$_3$), sulfur (S) as a simple substance, etc.

Having fully described the preferred embodiment of the present invention, the scope of the present invention is not limited to the details thereof in any way, and includes alterations and modifications thereof, if they are not beyond the spirit of the present invention. For example, as described above, a fixed-bed type reaction system is preferably used as the reaction system in the present invention, and therefore, the reactor may be divided along the longitudinal direction of the reaction tube so as to form different regions each to be charged with the catalyst. The respective catalyst-charged regions may be partitioned from one another by independently temperature-controllable jackets. As a preferable embodiment, there is exemplified a fixed-bed multitubular reactor which has 2 or more catalyst-charged regions each of which can be independently controlled in temperature.

Again, in the foregoing embodiment, the catalysts 3 in the alumina-mixed catalyst packed bed 20 and the catalyst packed bed 30 are not limited to those of the same composition. The catalysts 3 having different compositions may be charged in the respective beds. Likewise, the compositions of the catalysts 3 and the diluents 4 and the content rates of the diluents 4 in the first to third alumina-mixed catalyst packed beds 21 to 23 may be the same as or different from one another.

Again, in the foregoing embodiment, the alumina-mixed catalyst packed bed 20 with the structure of three beds is exemplified. However, the number of the beds included in the alumina-mixed catalyst bed is not limited. The number of the beds may be optionally selected usually within a range of from about 1 to about 5.

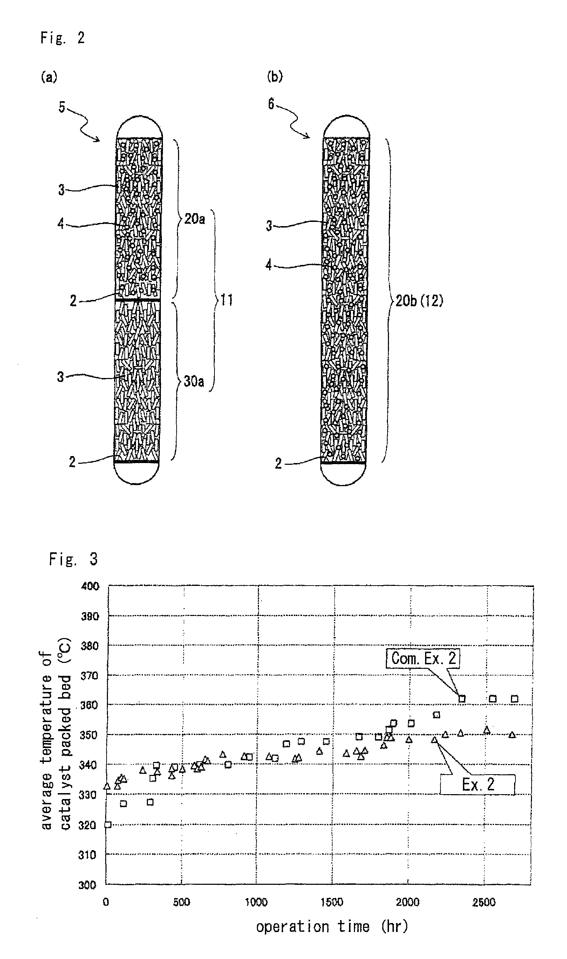

The arrangement of the catalyst packed is not limited to that described in the foregoing embodiment. For example, the arrangements illustrated in Figs. 2(a) and 2(b) may be employed. As shown in Fig. 2(a), the catalyst packed bed 11 which the reaction tube 5 comprises includes a one-bed alumina-mixed catalyst packed bed 20a which occupies a region on the upstream side of the reaction tube 5, and a catalyst packed bed 30a which occupies a region on the downstream side thereof. On the other hand, as shown in Fig. 2(b), the catalyst packed bed 12 which the reaction tube 6 comprises consists of only the alumina-mixed catalyst packed bed 20b. Other arrangement of the reaction tube is similar to that of the reaction tube 1 of the above-described embodiment. The parts which are the same as those in Fig. 1 are denoted by the same reference numerals to thereby omit the descriptions thereof.

EXAMPLES

The present invention will be described in detail by way of Examples thereof, which however should be not construed as limiting the scope of the present invention in any way. In Examples set forth below, the units of "part" and "%" for use in expression of a content and an amount used are based on weight, unless otherwise specified; and the unit of (ml/min.) for use in expression of a gas-feeding rate is a value reduced under conditions of 0°C and one normal atmosphere, unless otherwise specified.

The supported ruthenium oxide catalysts used in the following Examples and Comparative Examples were produced as follows.

[Reference Example]

(Preparation of Carrier)

Firstly, titania powders ["F-1R" with a rutile-type titania ratio of 93%, manufactured by Showa Titanium Co., Ltd.] (100 parts) were mixed with an organic binder ["YB-152A" manufactured by YUKEN INDUSTRY CO., LTD.] (2 parts), followed by pure water (29 parts) and titania sol ("CSB" with a titania content of 40%, manufactured by SAKAI CHEMICAL INDUSTRY CO., LTD.] (12.5 parts), and were then kneaded to obtain a mixture.

This mixture was extruded into a noodle-like strand with a diameter of 3.0 mmΦ, which was then dried at 60°C for 2 hours and was then fractured into grains with lengths of from about 3 to about 5 mm as molded articles, using a rotary type non-bubbling kneader ["NBK-1" manufactured by Nippon Seiki Co., Ltd.] as a fracture machine. The temperature of the resulting molded articles was raised from room temperature to 600°C in an air over 1.7 hours, and the molded articles were then maintained at the same temperature for 3 hours for calcination thereof. One hundred grams of the resulting calcined articles were impregnated with a solution of tetraethyl orthosilicate ["Si$(OC_2H_5)_4$" manufactured by Wako Pure Chemical Industries, Ltd.] (3.55 g) in ethanol (14.6 g).

The operation of impregnating the calcined articles with this solution was repeated 8 times in total, to obtain white solids (934 g in total). The white solids were left to stand still at a temperature of from 20 to 30°C in an air for 20 hours. The resulting solids (808 g) were raised in temperature from room temperature to 300°C in an air over 0.8 hour, and were then maintained at the same temperature for 2 hours for calcination thereof. Thus, a white titania carrier having a silica content of 1.0% was obtained. The carrier contained 99% of titania based on the entire weight of the carrier. A ratio of rutile type titania to the titania contained in the carrier was 90% or more.

(Production of Supported Ruthenium Oxide Catalyst)

The titania carrier thus obtained (100.0 g) was impregnated with an aqueous solution of ruthenium chloride hydrate ["RuCl$_{3 \cdot n}$H$_2$O" with a Ru content of 40.0%, manufactured by N.E. CHEMCAT Co., Ltd.] (2.43 g) in pure water (22.1 g) and was then left to stand still at a temperature of from 20 to 33°C in an air for 15 hours or longer so as to be dried in an air. The resulting solids (103.3 g) were raised in temperature from room temperature to 250°C over 1.3 hours under a stream of an air, and were then maintained at the same temperature for 2 hours for calcination thereof. Thus, there were obtained blue-gray solids each having a ruthenium oxide content of 1.25%, i.e., supported ruthenium oxide catalyst (100.7 g) having ruthenium oxide and silica supported on a carrier.

Then, the above-described operation of impregnating the titania carrier (100.0 g) with the aqueous solution of ruthenium chloride hydrate, and calcining them was repeated 8 times in total, to obtain the supported ruthenium oxide catalyst (806 g in total).

[Example 1]

<Charge of Catalyst>

As shown in Fig. 1, the catalyst was charged in the reaction tube 1. The following materials were used in this charge of the catalyst:

Reaction tube 1: a quartz reaction tube with an inner diameter of 21 mm, equipped with a thermometer sheath tube with an outer diameter of 4 mm

Partition Material 2: quartz wool

Catalyst 3: the supported ruthenium oxide catalyst obtained in Reference Example

Diluent 4: γ-alumina balls with a diameter of 3 mmϕ ["NKHD-24" with a BET specific surface area of 311 $m^2$/g and a pore volume of 0.45 ml/g, manufactured by Sumitomo Chemical Company, Ltd.]

The catalyst was charged as follows. Firstly, the partition material 2 was charged in the lower portion of the reaction tube 1. Then, the catalyst 3 (14.2 g) was charged from the upper opening of the reaction tube 1 to form a catalyst packed bed 30 on the partition material 2.

The partition material 2 was charged onto this catalyst packed bed 30. After that, the catalyst 3 (2.6 g) was mixed with the diluent 4 (1.4 g), and this mixture was charged from the upper opening of the reaction tube 1 to form a third alumina-mixed catalyst packed bed 23 on the partition material 2. Likewise, a second alumina-mixed catalyst packed bed 22 and a first alumina-mixed catalyst packed bed 21 were formed in this order to compose an alumina-mixed catalyst packed bed 20 comprising the first to third alumina-mixed catalyst packed beds 21 to 23. Further, α-alumina balls ["SSA995" with a BET specific surface area of smaller than 0.1 $m^2$/g, manufactured by NIKKATO CORPORATION] (15.0 g) were charged to form a preheating bed 35 at the uppermost region relative to the gas flowing direction.

The arrangement of the catalyst packed, except for the charged partition materials 2, comprised five beds in total, i.e., the preheating bed 35, the first alumina-mixed catalyst packed bed 21, the second alumina-mixed catalyst packed bed 22, the third alumina-mixed catalyst packed bed 23 and the catalyst packed bed 30 arranged in this order from the upstream side relative to the gas flowing direction. A content ratio of the diluent 4 to each of the alumina-mixed catalyst packed beds was 35%. In each of the alumina-mixed catalyst packed beds, a content ratio in volume of the catalyst 3 to the diluent 4 was 1 : 1.

<Production of Chlorine>

The reaction tube 1 which already had been charged with the catalyst was set in electric furnaces as follows: the region of the reaction tube 1 from the preheating bed 35 to the alumina-mixed catalyst packed bed 20 was held in a temperature-controllable electric furnace; and the region of the catalyst packed bed 30 of the reaction tube 1 was held in another temperature-controllable electric furnace. Then, the temperatures of the respective catalyst packed beds were raised to 300°C, while a nitrogen gas was fed at a rate of 200 ml/min. in the arrow direction A into the reaction tube 1 from the inlet 1a of the reaction tube 1.

Then, the feeding of the nitrogen gas was stopped; then, an oxygen gas and water vapor were fed at rates of 100 ml/min. (0.27 mole/hour) and 3.2 ml/min. (0.009 mole/hour), respectively; and sequentially, a hydrogen chloride gas and a carbonyl sulfide (COS) gas diluted with a nitrogen gas to 10 ppm were fed at rates of 200 ml/min. (0.54 mole/ hour) and 12 ml/min. (0.32 mole ppm/hour as COS), respectively, to thereby start production of chlorine under a reaction pressure of 0.1 MPa.

This operation was continued while a conversion of hydrogen chloride at the outlet 1b of the reaction tube was maintained at about 85%. The operation was stopped at a point of time when the temperature of the reaction tube 1 had reached a temperature of from about 340 to about 360°C after the passage of 1,200 hours since the start of the reaction. After the stop of the operation, the catalyst 3 and the diluent 4 were drawn out, and the sulfur contents of the catalyst 3 and the diluent 4 were measured before the use thereof and after the use thereof for 1,200 hours. The method of finding a conversion of hydrogen chloride and the method of measuring a sulfur content were described below. The results are shown in Table 1 in which γ-alumina means the above-described diluent 4.

(Conversion of Hydrogen Chloride)

Sampling was conducted for 20 minutes by allowing the gas outgoing from the outlet 1b of the reaction tube to pass through an aqueous solution of 30% potassium iodide. The resulting sample was subjected to iodine titration to measure the amount of produced chlorine to thereby find a chlorine-producing rate (mole/hour). This found chlorine-producing rate and the above-described hydrogen chloride gas-feeding rate were substituted in the following equation (II) to calculate a conversion of hydrogen chloride:

[Equation 2]

Conversion of hydrogen chloride (%) =

[(a X 2)/b] X 100          ...(II)

a: a chlorine-producing rate (mole/hour)
b: a hydrogen chloride gas-feeding rate (mole/hour)

(Sulfur Content)

Firstly, a predetermined amount of the sample in the form of fine powders and a predetermined amount of sodium peroxide were put in an alumina crucible, and the crucible was agitated while being heated at its bottom, to thereby melt the sample in the crucible. Next, the melted sample was allowed to cool and was then washed into a beaker with predetermined amounts of pure water and an aqueous hydrochloric acid solution. The resulting sample was heated and melted at a temperature of from about 60 to about 70°C. The resulting solution was allowed to cool and was then poured into a measuring flask and was adjusted to the mark. A concentration of the sulfur component in this solution was measured by the inductively coupled plasma-atomic emission spectrometry (ICP-AES). The sulfur component content in the sample was calculated from the resultant data. In this regard, the amounts of the respective reagents/ solvents were appropriately adjusted in accordance with the sulfur component content in the sample, since the concentration of the sulfur component in the above solution was found based on a previously prepared calibration curve.
[Table 1]

| Arrangement of Catalyst Packed | | Charged amount (g) | Sulfur content (wt.%) | |
|---|---|---|---|---|
| | | | Before use | After 1,200 hours |
| Preheating bed 35 | α-alumina | 15.0 | - | - |
| First alumina-mixed catalyst packed bed 21 | Catalyst 3 | 2.6 | < 0.01 | 0.06 |
| | γ-alumina | 1.4 | < 0.01 | 0.38 |
| Second alumina-mixed catalyst packed bed 22 | Catalyst 3 | 2.6 | < 0.01 | 0.07 |
| | γ-alumina | 1.4 | < 0.01 | 0.22 |
| Third alumina-mixed catalyst packed bed 23 | Catalyst 3 | 2.6 | < 0.01 | 0.03 |
| | γ-alumina | 1.4 | < 0.01 | 0.03 |
| Catalyst packed bed 30 | Catalyst 3 | 14.2 | < 0.01 | 0.01 |

As is apparent from the results of Table 1, the γ-alumina (or the diluent 4) adsorbed or absorbed more sulfur than the catalyst 3 in each of the first and second alumina-mixed catalyst packed beds 21 and 22. It was known from this fact that the sulfur was selectively adsorbed or absorbed onto the γ-alumina. Little sulfur was detected in the catalyst packed bed 30, and thus, it was known from this fact that the γ-alumina sufficiently adsorbed or absorbed the sulfur component in each of the first and second alumina-mixed catalyst packed beds 21 and 22.

[Comparative Example 1]

<Charge of Catalyst>

The arrangement of the catalyst packed was changed to the arrangement shown in Table 2, instead of that shown in Table 1. That is, the arrangement of the catalyst packed, except for the partition materials 2, comprised six beds in total, i.e., a preheating packed bed, first and second alumina-mixed catalyst packed beds and first to third catalyst packed beds arranged in this order from the upstream region of the reaction tube relative to the gas flowing direction.
The charged amounts of the catalyst for the respective catalyst beds are shown in Table 2. The content rate of $\alpha$-alumina (or a diluent) in each of the alumina-mixed catalyst packed beds was 60%. A content ratio in volume of the catalyst 3 to the $\alpha$-alumina (or the diluent) in each of the alumina-mixed catalyst packed beds was 1 : 1. In Table 2, the $\alpha$-alumina means the $\alpha$-alumina balls ["SSA995" with a BET specific surface area of smaller than 0.1 $m^2$/g, manufactured by NIKKATO CORPORATION] composing the preheating bed 35 of Example 1. Other arrangement of the catalyst packed was the same as that in the part of Example 1.

<Production of Chlorine>

The reaction tube 1 charged with the catalyst was set as follows: the region of the reaction tube from the preheating packed bed to the first and second alumina-mixed catalyst packed beds and the first catalyst packed bed was held in a single temperature-controllable electric furnace, and the region of the second and third catalyst packed beds was held in another single temperature-controllable electric furnace. Then, the temperatures of the respective catalyst packed beds were raised to 300°C, while a nitrogen gas was fed at a rate of 300 ml/min. into the reaction tube.
The feeding of the nitrogen gas was stopped, and production of chlorine was started in the same manner as in Example 1, except that an oxygen gas and water vapor were fed at rates of 150 ml/min. (0.40 mole/hour) and 9 ml/min. (0.024 mole/hour), respectively; and that, sequentially, a hydrogen chloride gas and a carbonyl sulfide (COS) gas diluted with a nitrogen gas to 10 ppm were fed at rates of 300 ml/min. (0.80 mole/hour) and 18 ml/min. (0.48 mole ppm/hour as COS), respectively.
This operation was continued while a conversion of hydrogen chloride at the outlet 1b of the reaction tube being maintained at about 85%. The operation was stopped at a point of time when the temperature of the reaction tube 1 had reached a temperature of from about 340 to about 350°C after the passage of 1,200 hours since the start of the reaction. After the stop of the operation, the catalyst 3 and the $\alpha$-alumina as the diluent were drawn out, and the sulfur contents of the catalyst 3 and the $\alpha$-alumina before the use thereof and after the use thereof for 1,200 hours were measured in the same manner as in Example 1.
The results are shown in Table 2.
[Table 2]

| Arrangement of Catalyst Packed | | Charged amount (g) | Sulfur content (wt.%) | |
|---|---|---|---|---|
| | | | Before use | After 1,200 hours |
| Preheating bed | $\alpha$-alumina | 7.0 | - | - |
| First alumina-mixed catalyst packed bed | Catalyst 3 | 7.6 | < 0.01 | 0.07 |
| | $\alpha$-alumina | 11.4 | < 0.01 | 0.01 |
| Second alumina-mixed catalyst packed bed | Catalyst 3 | 7.7 | < 0.01 | 0.05 |
| | $\alpha$-alumina | 11.4 | < 0.01 | < 0.01 |
| First catalyst packed bed | Catalyst 3 | 7.7 | < 0.01 | 0.05 |
| Second catalyst packed bed | Catalyst 3 | 7.6 | < 0.01 | 0.03 |
| Third catalyst packed bed | Catalyst 3 | 13.4 | < 0.01 | < 0.01 |

As is apparent from the results of Table 2, it was known that the $\alpha$-alumina did not adsorb or absorb sulfur in each of the first and second alumina-mixed catalyst packed beds. It was known that the catalyst 3 adsorbed or absorbed sulfur component in each of the first and second alumina-mixed catalyst packed beds and the first and second catalyst packed beds.

[Example 2]

The operation was continued while a conversion of hydrogen chloride at the outlet 1b of the reaction tube was maintained at about 85% to thereby produce chlorine in the same manner as in Example 1, except that the operation was stopped at a point of time when 2,700 hours had passed since the start of the reaction. A relationship between the operation time and the average temperature of the catalyst packed beds is shown in Fig. 3.

[Comparative Example 2]

The operation was continued while a conversion of hydrogen chloride at the outlet 1b of the reaction tube was maintained at about 85% to thereby produce chlorine in the same manner as in Comparative Example 1, except that the operation was stopped at a point of time when 2,700 hours had passed since the start of the reaction. A relationship between the operation time and the average temperature of the catalyst packed beds is shown in Fig. 3.
When the catalyst was degraded by the sulfur component, it was needed to raise the average temperature of the catalyst packed beds so as to continue the operation while a conversion of hydrogen chloride at the outlet 1b of the reaction tube was maintained at about 85%.
Therefore, a larger slope of the graph indicating the relationship between the operation time and the average temperature of the catalyst packed beds means that the rate of degradation of the catalyst due to the sulfur component was high.
As is apparent from Fig. 3, the slope of the graph for Example 2 was smaller than that for Comparative Example 2. It was known from this result that γ-alumina could well adsorb or absorb the sulfur component under the conditions for the oxidation reaction and thus could suppress the degradation of the catalyst due to the sulfur component.

**Claims**

1. A process for producing chlorine by feeding sulfur component-containing hydrogen chloride and oxygen to a reaction tube comprising a catalyst packed bed, so as to oxidize the hydrogen chloride, **characterized in that** the catalyst packed bed includes an alumina-mixed catalyst packed bed formed of a mixture of a catalyst and alumina, and **in that** the BET specific surface area of the alumina is from 10 to 500 $m^2$/g.

2. The process of Claim 1, wherein the alumina is γ-alumina and/or θ-alumina.

3. The process of Claim 1 or 2, wherein the content rate of the alumina in the alumina-mixed catalyst packed bed is from 5 to 90% by weight.

4. The process of any one of Claims 1 to 3, wherein the alumina-mixed catalyst packed bed is disposed on the upstream side of the reaction tube.

5. The process of any one of Claims 1 to 4, wherein the catalyst is at least one kind of catalyst selected from the group consisting of a copper-containing catalyst, a chromium-containing catalyst and a ruthenium-containing catalyst.

6. The process of Claim 5, wherein the ruthenium-containing catalyst is a supported ruthenium oxide catalyst which comprises a carrier and ruthenium oxide supported on the carrier.

7. The process of Claim 5, wherein the ruthenium-containing catalyst is a supported ruthenium oxide catalyst which comprises a carrier, and ruthenium oxide and silica supported on the carrier.

8. The process of Claim 6 or 7, wherein the carrier contains 30% by weight or more of titania based on the entire weight of the carrier.

9. The process of Claim 8, wherein the titania in the carrier comprises 20% by weight or more of rutile type titania.

10. The process of any one of Claims 1 to 9, wherein the content of sulfur component in the hydrogen chloride is 1 ppm by volume or less based on the volume of the hydrogen chloride.

Fig. 1

Fig. 2

(a)

(b)

Fig. 3

<div align="center">

**INTERNATIONAL SEARCH REPORT**

</div>

| | International application No. |
|---|---|
| | PCT/JP2009/068569 |

**A. CLASSIFICATION OF SUBJECT MATTER**
*C01B7/04(2006.01)i*

According to International Patent Classification (IPC) or to both national classification and IPC

**B. FIELDS SEARCHED**

Minimum documentation searched (classification system followed by classification symbols)
C01B7/04

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-155199 A  (Sumitomo Chemical Co., Ltd.), 10 July 2008 (10.07.2008), claims; examples & WO 2008/069114 A1 | 1-10 |
| Y | JP 2005-238225 A  (Sumitomo Chemical Co., Ltd.), 08 September 2005 (08.09.2005), claims; example 2 & WO 2005/072859 A1 | 1-10 |
| Y | JP 2004-277282 A  (Sumitomo Chemical Co., Ltd.), 07 October 2004 (07.10.2004), claims; example 1 (Family: none) | 1-10 |

☒  Further documents are listed in the continuation of Box C.       ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 December, 2009 (24.12.09) | 12 January, 2010 (12.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/068569

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-345883 A  (Mitsubishi Chemical Corp.), 09 December 2004 (09.12.2004), (Family: none) | 1-10 |
| E,A | JP 2009-022917 A  (Sumitomo Chemical Co., Ltd.), 05 February 2009 (05.02.2009), & WO 2009/014229 A1 | 1-10 |

Form PCT/ISA/210 (continuation of second sheet) (April 2007)

**EP 2 366 661 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008280262 A
- JP 2000281314 A
- JP 2006117528 A
- JP 2004277282 A
- JP 2005177614 A
- JP 61136902 A
- JP 61275104 A
- JP 62113701 A
- JP 62270405 A
- JP 9067103 A
- JP 10338502 A
- JP 2002079093 A
- JP 2002292279 A
- JP 2008155199 A